# EUROPEAN PATENT SPECIFICATION

(11) **EP 1 645 494 B1**
(45) Date of publication and mention of the grant of the patent: **11.11.2009**
(21) Application number: 05020904.8
(22) Date of filing: 26.09.2005
(51) Int. Cl.: B62D 33/06

(54) **Utility vehicle with suspended driver's cab**
Nutzfahrzeug mit aufgehängter Fahrerkabine
Véhicule utilitaire avec cabine conducteur suspendue

(30) Priority: 06.10.2004 GB 0422217
(43) Date of publication of application: 12.04.2006
(73) Proprietor: AGCO GmbH, 87616 Marktoberdorf (DE)
(72) Inventor: Capelle, Thorsten, 37133 Freidland (DE); Kleinhenz, Andreas, 87672 Rosshaupten (DE)
(74) Representative: Morrall, Roger

(56) References cited:
- EP-A- 0 908 376
- EP-A- 0 994 009
- EP-A- 1 384 657
- US-A1- 2004 129 468

## Description

The invention relates to an utility vehicle, such as an agricultural vehicle or tractor, with a driver's cab, that is suspended with respect to a vehicle frame by elastic means and guided relatively to the vehicle frame by means of links that are linked with the driver's cab approximately in the bottom area thereof and are orientated in a longitudinal direction of the vehicle.

WO 91/18781 (figs. 22, 25 and 26) discloses a cleaning vehicle that is equipped with a driver's cab suspended as described above. The driver's cab is supported elastically on the vehicle frame by means of suspension struts located below the driver's cab that permit larger deflections of the driver's cab than rubber elements and are capable of providing an increased driving comfort by reducing the peaks of the vertical forces impinging on the passengers of the vehicle. Such a soft support of the driver's cab requires an increased effort for the guidance of the driver's cab with respect to the vehicle frame. In order to limit the movements of the driver's cab in the longitudinal and lateral direction as well as rolling movements and pitching movements that could lead to a considerable irritation of the driver of the vehicle, the known driver's cab is linked pivotally by a set of links with the vehicle frame at the rear of the cab walls. Each set of links comprises one lower link and one upper link that are configured as a parallelogram. The lower link and the upper link limit movements of the driver's cab in the longitudinal direction of the vehicle and pitching movements. In order to also limit movements of the driver's cab in lateral directions of the vehicle and to limit rolling movements, below the driver's cab and at the backside of the driver's cab two links (Panhard rods) orientated in horizontal and transverse direction are provided between the driver's cab and the vehicle frame.

However, due to the configuration of the suspension struts, the lower link and one of the Panhard rods below the driver's cab it has transpired that the aforementioned support of the driver's cab is not suitable for agricultural tractors. In modern agricultural tractors the space available is needed for accommodating of parts such as a fuel tank, air conditioning equipment, a hydraulic system, hydraulic piping and valves.

It is the object of the present invention to reduce the number of components necessary to provide a fully sprung support of the driver's cab of a utility vehicle such as an agricultural tractor.

This is achieved by supporting the driver's cab at the back on two laterally spaced spring/damper-elements and at the front on one single spring/damper-element that is located approximately centrally in front of a front wall of the driver's cab. Centrally in front of the front wall a linking configuration is provided that comprises two first links that are laterally spaced and extend generally longitudinally relative to the vehicle and are linked with each other to form a rigid unit, the links having pivoting joints associated with the cab and pivoting joints associated with the vehicle which define generally transversely extending pivot axes for the first links.

Thus a support for the driver's cab is provided that is capable of both guiding the driver's cab in longitudinal direction and in transverse direction as well as reducing the pitching movements and the rolling movements of the driver's cab to an acceptable level. The linking configuration that is provided with torsional stiffness sufficient for the aforementioned purpose is responsible for both guiding the driver's cab in longitudinal direction and transversal direction as well as absorbing the rolling movements. As a result in a front area of the cab a front Panhard rod and a spring/damper-element can be eliminated, so that space below the driver's cab is as far as possible kept free of components necessary for the suspension of the driver's cab.

The arrangement of the linking configuration in such a way that the lateral distance between the pivoting joints of the first links with the cab approximates to half of the width of the front wall of the driver's cab and which in turn approximates to double effective length of the first links, allows accommodation of the links at the front of the driver's cab below an engine cover where it is essentially out of sight as well as controlling the forces acting upon the pivoting joints associated with the cab.

In a preferred arrangement the lateral distance between the pivoting joints of the first links and the vehicle frame is smaller than the lateral distance between the pivoting joints between the first links and the diver's cab.

Such an arrangement is particularly suited to the requirement of an agricultural tractor since, in such vehicles, in front of the driver's cab the engine and ancillary equipment have to be in a cross section that is as small as possible in order to provide good visibility of tools that are carried at the front of the tractor. Thus the compact arrangement of the present invention is particularly appropriate for this application and the resulting forces from the control of the movement of the cab can be guided by means of the linking connection to the robust vehicle frame. On the other hand, due to the increased lateral distance between the pivoting joints of the links with the cab, the forces acting upon these joints are relatively small and can be absorbed by the frame of the driver's cab.

Additionally it is suggested that an additional link supported at the vehicle frame is provided, which is located centrally in front of the front wall in a plane extending approximately through the centre of gravity of the driver's cab. The aforementioned additional link is connected with the driver's cab by two laterally spaced pivoting joints. Due to the cooperation of the first lower links and the above additional link the pitching movements of the driver's cab can be limited.

Additionally the rolling behaviour of the driver's cab can be adapted by the spacing of the pivoting joints and the stiffness of the links as well as by dimensioning the lateral distance between the pivoting joints of the additional links with the cab to be equal to or smaller than the lateral distance between the pivoting joints of the first links with the cab.

By means of the elastic deformability of the length of the additional link the pitching behaviour of the driver's cab can be adapted.

Furthermore, due to the establishment of a predetermined buckling point in the additional link, by means of angling the link with an angle of at least 90 °, in case of an accident any penetration of the link into the interior of the driver's cab is prevented.

The pivoting joints of the first links and the addition link with the vehicle may be carried on a support frame positioned between an engine positioned in front of the driver's cab and the front wall of the driver's cab. This provides the opportunity to use one component (the support frame) in a multifunctional way. In a known manner the support frame could be coated with heat insulated and/or sound-absorbing materials, in order to act as a bulkhead to separate undesired emissions of the combustion engine from the driver's cab. The support frame could also be used as a carrier for different components that have to be accommodated close to the engine, for example an electronic control unit for the engine, water tanks and the like.

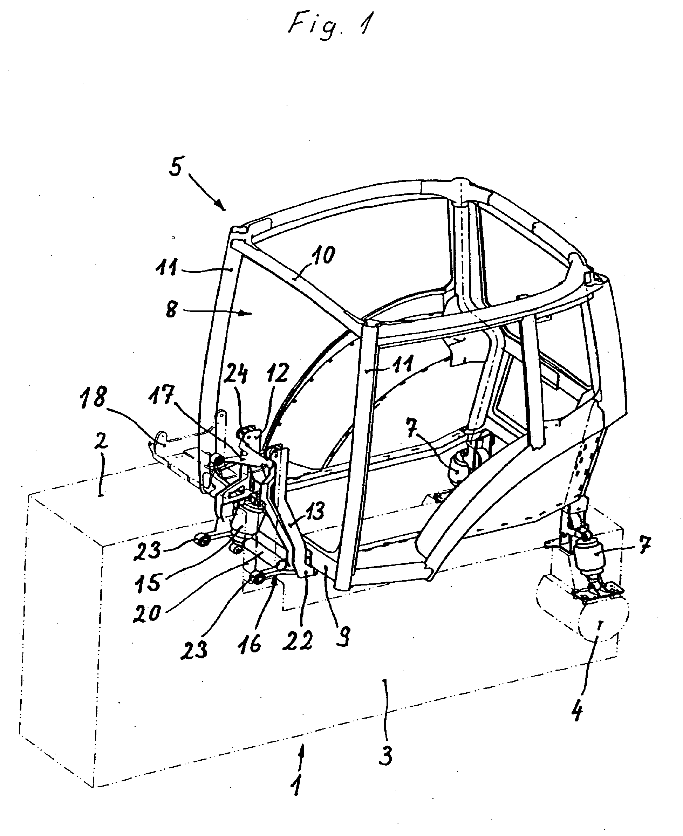

One embodiment of the invention is described in greater detail with reference to the accompanying drawings in which:-
- Fig. 1: shows a perspective view of a driver's cab linked with a vehicle frame on top of the vehicle frame;

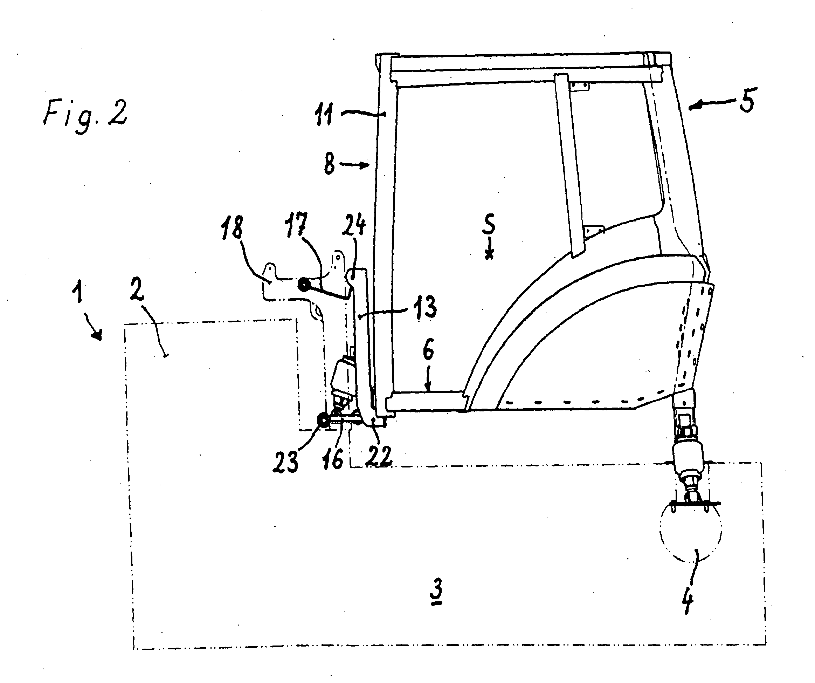

- Fig. 2: shows a lateral view of the driver's cab according to Fig. 1;

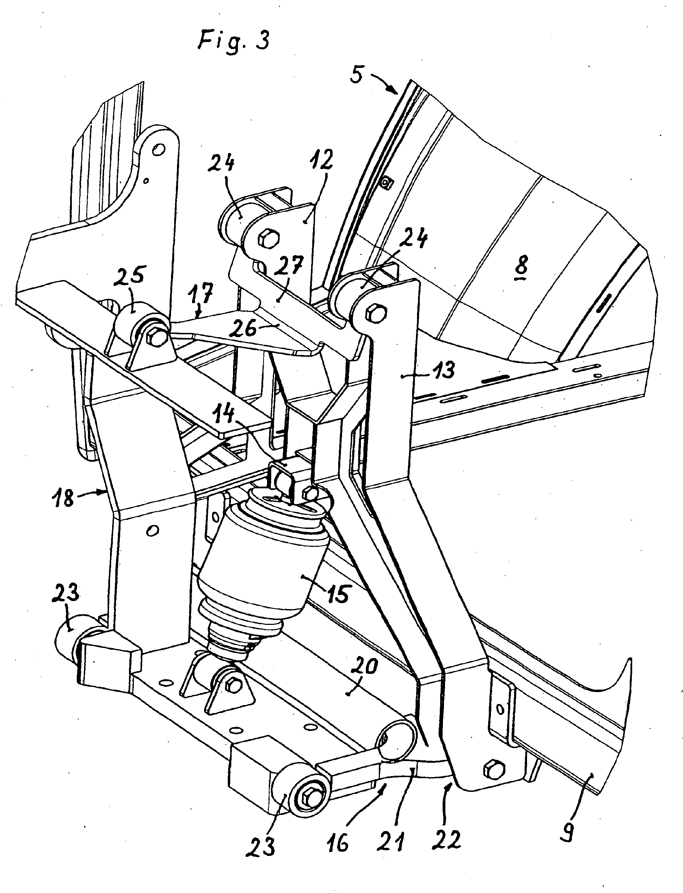

- Fig. 3: shows a perspective view of the front wall of the driver's cab and part of a cab support frame associated with the vehicle and;
- Fig. 4: shows a further -perspective view of the support frame associated with the vehicle.

In the drawing, an agricultural tractor has a main frame 1 having a driving area 2 with a combustion engine, a transmission area 3 as well as right hand side and left hand side axle trunnions 4 for the rear wheels of the vehicle which are not shown in the figures.

Above the transmission area 3 on the vehicle frame a driver's cab 5 is located. The driver's cab consists of a frame work of special section tubes that determine the strength of the cab. In a bottom area 6, the special section tubes form a rectangle with spring/damper-elements 7 located at the rear corner areas. The driver's cab is supported on the axle trunnions 4 via the spring/damper-elements 7. The spring/damper-elements 7 are inclined with respect to each other, in order to provide stabilizing lateral forces acting upon the driver's cab 5 from the vehicle frame 1. The front wall 8 of the driver's cab 5 is bordered by a lower special section tube 9, that is also part of the bottom area 6 of the cab. An upper special section tube 10 that is orientated in parallel to the lower special section tube 9 and special section tubes 11 orientated in a vertical direction are connected to form a closed frame which constitutes the front wall 8.

In front of the front wall 8 there are located two frame components 12, 13 orientated in upright direction and symmetrically with respect to a longitudinal mid-plane of the vehicle. The lower end portions of frame components 12, 13 are connected with the lower special section tube 9. The frame components 12, 13 comprise a U-shaped cross section, which is open in the front direction, and they extend up to approximately the height of the centre of gravity S of the driver's cab 5. Approximately at their mid-height position the two frame components 12, 13 are rigidly connected with each other and include a holding device 14 for a single spring/damper-element 15. The driver's cab 5 is at the front supported from the vehicle frame 1 via the aforementioned spring/damper-element 15.

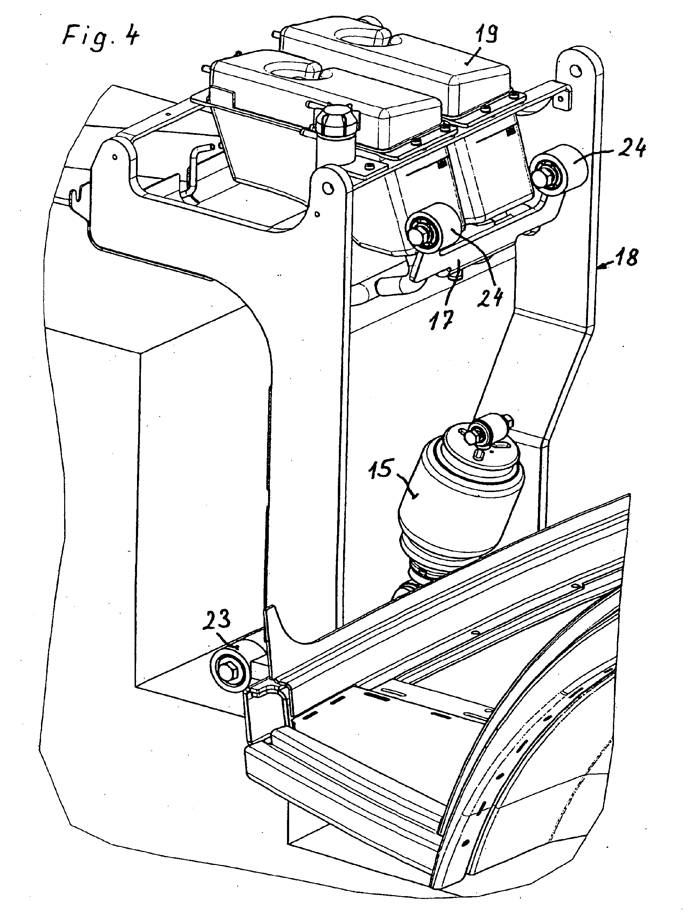

In order to provide a guidance for the driver's cab 5 in a longitudinal direction and in a transverse direction as well as to limit rolling movements and pitching movements of the driver's cab, the driver's cab is in the centre of the cab linked with a vertical support frame 18 (best seen in Figure 4) by a linking configuration 16 and an additional upper link 17 located above the linking configuration 16. The vertical support frame 18 is rigidly connected with the vehicle frame 1 and is also used as a holding device for different components, for example a water container 19, a control unit for the engine and other items. Because the vertical frame 18 is located between the driving area 2 with the combustion engine and the front wall 8 of the cab, the vertical frame 18 is additionally used as a bulkhead separating the combustion engine from the driver's cab 5.

The linking configuration 16 provides the guidance of the driver's cab 5 in longitudinal and transverse direction of the vehicle as well the limitation of rolling movements, whereas the additional upper link 17 is essentially used for a limitation of pitching movements of the driver's cab 5. However, the upper link 17 also controls, together with the linking configuration 16, the rolling movement of the driver's cab 5.

The linking configuration 16 is built as a unit with a high torsional stiffness. The linking configuration 16 consists of a tube 20 extending in a transverse direction of the cab with a length that corresponds approximately with the width of the driving area 2. Links 21 orientated in longitudinal direction of the vehicle are welded on the ends of tube 20. At the ends of links 21 pivoting joints 22 associated with the cab and pivoting joints 23 associated with the frame are located. The joints 22 associated with the cab are linked in the region of the bottom area 6 of the driver's cab 5 with the frame components 12, 13. The lateral distance between the joints 22 associated with the cab correlates approximately with half of the width of the front wall 8 of the driver's cab 5 in order to provide a broad supporting base for the linking configuration 16 on the driver's cab 5.

If the agricultural tractor is ready for action the driving area 2 is surrounded by an engine cover (not shown), which overlaps the frame 18 immediately in front of the front wall 8. In order to accommodate the linking configuration 16 at least to a large extend out of sight and to protect it against the weather, the distance between the pivoting joints 23 associated with the vehicle frame is limited to the width of the driving area 2. The effective length of the linking configuration 16 in longitudinal direction, (i.e. the distance between the joints 22 and 23), is chosen as being approximately a quarter of the width of the front wall 8 in order to keep the required space in longitudinal direction of the vehicle small.

The additional link 17 is essentially T-shaped and connected with at the frame components 12, 13 by two pivoting joints 24 that are laterally spaced. In the area associated with the vehicle frame the link 17 is supported from frame 18 via one single pivoting joint 25, in order to control the pitching movements of the driver's cab resulting from accelerating and decelerating actions of the vehicle. Accordingly the distance of the joints 24 associated with the cab from each other corresponds approximately to a quarter of the width of the front wall 8 of the driver's cab 5. The effective length of link 17, (i.e. the distance between joints 24 and 25) corresponds to the length of the linking configuration 16.

In order to avoid a penetration of link 17 into the interior of the driver's cab 5 in case of an accident, the link 17 includes a predetermined buckling point 26. The predetermined buckling point 26 is realized by angling part 27 which carries joints 24 at approximately 120° with respect to the part carrying the joint 25. For a determination of the angle of the angled part, the resulting elasticity of the upper link 17 in longitudinal direction of the vehicle and its effect on the control of the cab should be considered.

## Claims

1. A utility vehicle, such as an agricultural tractor, with a driver's cab, that is suspended with respect to a vehicle frame (1) by elastic means and guided relatively with respect to the vehicle frame by links, the links being linked with the driver's cab approximately in the bottom area thereof and being orientated in the longitudinal direction of the vehicle, **characterised in that** a rear portion of the driver's cab (5) is supported by two laterally spaced spring/damper-elements (7) and a front portion of the driver's cab (5) is supported by one single spring/damper-element (15) located approximately centrally in front of a front wall (8) of the driver's cab (5), and a linking configuration (16) is provided located centrally in front of the front wall (8), the linking configuration comprising two first links (21) that are laterally spaced and extend generally longitudinally relative to the vehicle and are linked with each other to form a rigid unit, the links having pivoting joints (22) associated with the cab and pivoting joints (23) associated with the vehicle frame which define generally transversely extending pivot axes for the first links (21).

2. A vehicle according to claim 1, **wherein** the lateral distance between the pivoting joints (22) of the first links (21) with the cab approximates to half of the width of the front wall (8) of the driver's cab (5) which in turn approximates to double the effective length of the first links (21).

3. A vehicle according to claim 1 or 2, **wherein** the lateral distance between the pivoting joints (23) of the first links (21) and the vehicle frame (1) is smaller than the lateral distance between the pivoting joints (22) between the first links (21) and the diver's cab (5).

4. A vehicle according to claim 1, **wherein** an additional link (17) pivotally supported by the vehicle frame (1) is located centrally in front of the front wall (8) in a plane that extends approximately through the centre of gravity (S) of the driver's cab (5), the additional link (17) being connected with the driver's cab (5) by two laterally spaced pivoting joints (24).

5. A vehicle according to claim 4, **wherein** the lateral distance between the pivoting joints (24) of the additional link (17) with the cab is the same as or smaller than the lateral distance between the pivoting joints (22) of the first links (21) with the cab.

6. A vehicle according to claims 4 or 5, **wherein** the length of the additional link (17) in longitudinal direction is variable by means of an elastic deformation.

7. A vehicle according to claim 6, **wherein** the additional link (17) is angled with an angle of at least 90° for providing a predetermined buckling point (26).

8. A vehicle according to anyone of claims 1 to 7, **wherein** the pivoting joints (23, 25) of the first links (21) and the additional link (17) with the vehicle are carried on a support frame (18), positioned between an engine (2) of the vehicle located in front of the driver's cab (5) and the front wall (8) of the driver's cab (5).

## Patentansprüche

1. Nutz- oder Arbeitsfahrzeug, insbesondere landwirtschaftliches Zugfahrzeug oder Traktor, mit einer Fahrerkabine, die gegenüber einem Fahrzeugrahmen (1) durch mindestens ein elastisches Mittel aufgehängt ist und relativ zu dem Fahrzeugrahmen durch Verbindungselemente geführt ist, wobei die Verbindungselemente mit der Fahrerkabine ungefähr in dem Bodenbereich derselben verbunden und in Längsrichtung des Fahrzeugs orientiert sind, **dadurch gekennzeichnet, dass** ein hinterer Bereich der Fahrerkabine (5) durch zwei lateral beabstandete Feder/Dämpfer-Elemente (7) abgestützt ist und ein vorderer Bereich der Fahrerkabine (5) durch ein einzelnes Feder/Dämpfer-Element (15), welches ungefähr zentral vor einer vorderen Wandung (8) der Fahrerkabine (5) angeordnet ist, abgestützt ist, und dass eine Verbindungskonfiguration (16) vorgesehen ist, die zentral vor der vorderen Wandung (8) angeordnet ist, wobei die Verbindungskonfiguration zwei erste Verbindungselemente (21) aufweist, die lateral beabstandet sind und sich grundsätzlich in Längsrichtung des Fahrzeugs erstrecken und die miteinander verbunden sind zur Bildung einer steifen oder festen Einheit, und wobei die Verbindungselemente Schwenkgelenke (22), die der Kabine zugeordnet sind, sowie Schwenkgelenke (23), die dem Fahrzeugrahmen zugeordnet sind, besitzen, die grundsätzlich sich transversal erstreckende Schwenkachsen für die ersten Verbindungselemente (21) definieren.

2. Fahrzeug nach Anspruch 1, **dadurch gekennzeichnet, dass** der laterale Abstand zwischen den Schwenkgelenken (22) der ersten Verbindungselemente (21) zu der Kabine ungefähr der Hälfte der Breite der vorderen Wandung (8) der Fahrerkabine (5) entspricht, der oder die wiederum ungefähr dem Doppelten der effektiven Länge der ersten Verbindungselemente (21) entspricht.

3. Fahrzeug nach Anspruch 1 oder 2, **dadurch gekennzeichnet, dass** der laterale Abstand zwischen den Schwenkgelenken (23) der ersten Verbindungselemente (21) und des Fahrzeugrahmens (1) kleiner ist als der laterale Abstand zwischen den Schwenkgelenken (22) zwischen den ersten Verbindungselementen (21) und der Fahrerkabine (5).

4. Fahrzeug nach Anspruch 1, **dadurch gekennzeichnet, dass** ein zusätzliches Verbindungselement (17), welches verschwenkbar von dem Fahrzeugrahmen (1) abgestützt ist, zentral vor der vorderen Wandung (8) angeordnet ist in einer Ebene, die sich ungefähr durch den Schwerpunkt (S) der Fahrerkabine (5) erstreckt, wobei das zusätzliche Verbindungselement (17) mit der Fahrerkabine (5) durch zwei lateral beabstandete Schwenkgelenke (24) verbunden ist.

5. Fahrzeug nach Anspruch 4, **dadurch gekennzeichnet, dass** der laterale Abstand zwischen den Schwenkgelenken (24) des zusätzlichen Verbindungselements (17) und der Kabine genauso groß oder kleiner ist wie oder als der laterale Abstand zwischen den Schwenkgelenken (22) des ersten Verbindungselements (21) und der Kabine.

6. Fahrzeug nach Anspruch 4 oder 5, **dadurch gekennzeichnet, dass** die Länge des zusätzlichen Verbindungselements (17) infolge eines elastischen Deformationsvermögens in Längsrichtung variabel ist.

7. Fahrzeug nach Anspruch 6, **dadurch gekennzeichnet, dass** das zusätzliche Verbindungselement (17) abgewinkelt ist mit einem Winkel von zumindest 90°, um einen definierten Knickpunkt (26) zu gewährleisten.

8. Fahrzeug nach einem der Ansprüche 1 bis 7, **dadurch gekennzeichnet, dass** die Schwenkgelenke (23, 25) der ersten Verbindungselemente (21) und des zusätzlichen Verbindungselements (17) auf einem Tragrahmen (18) getragen sind, der zwischen einem Motor (2) des Fahrzeugs, der vor der Fahrerkabine (5) angeordnet ist, und der vorderen Wandung (8) der Fahrerkabine (5) angeordnet ist.

## Revendications

1. Véhicule utilitaire, tel qu'un tracteur agricole, avec une cabine de conducteur, qui est suspendue par rapport à un châssis de véhicule (1) par des moyens élastiques et guidée relativement par rapport au châssis de véhicule par des biellettes, les biellettes étant reliées à la cabine de conducteur approximativement dans sa zone inférieure et étant orientées dans la direction longitudinale du véhicule, **caractérisé en ce qu'**une partie arrière de la cabine de conducteur (5) est supportée par deux éléments formant ressort/amortisseur espacés latéralement (7) et une partie avant de la cabine de conducteur (5) est supportée par un élément formant ressort/amortisseur (15) situé approximativement de manière centrale face à une paroi avant (8) de la cabine de conducteur (5), et une configuration de liaison (16) est formée agencée de manière centrale face à la paroi avant (8), la configuration de liaison comprenant deux premières biellettes (21) qui sont espacées latéralement et s'étendent sensiblement longitudinalement par rapport au véhicule et sont reliées l'une à l'autre afin de former une unité rigide, les biellettes comportant des joints pivotant (22) associés à la cabine et des joints pivotant (23) associés au châssis de véhicule qui définissent des axes de pivot s'étendant sensiblement transversalement par rapport aux premières biellettes (21).

2. Véhicule selon la revendication 1, dans lequel la distance latérale entre les joints pivotants (22) des premières biellettes (21) avec la cabine est approximativement égale à la moitié de la largeur de la paroi avant (8) de la cabine de conducteur (5) qui elle-même est approximativement égale au double de la longueur utile des premières biellettes (21).

3. Véhicule selon la revendication 1 ou 2, dans lequel la distance latérale entre les joints pivotants (23) des premières biellettes (21) et le châssis de véhicule (1) est inférieure à la distance latérale entre les joints pivotants (22) entre les premières biellettes (21) et la cabine de conducteur (5).

4. Véhicule selon la revendication 1, dans lequel une biellette supplémentaire (17) supportée de manière à pouvoir pivoter par le châssis de véhicule (1) est située de manière centrale face à la paroi avant (8) dans un plan qui s'étend approximativement par le centre de la gravité (S) de la cabine de conducteur (5), la biellette supplémentaire (17) étant reliée à la cabine de conducteur (5) par deux joints pivotants espacés latéralement (24).

5. Véhicule selon la revendication 4, dans lequel la distance latérale entre les joints pivotants (24) de la biellette supplémentaire (17) avec la cabine est inférieure ou égale à la distance latérale entre les joints pivotant (22) des premières biellettes (21) avec la cabine.

6. Véhicule selon les revendications 4 ou 5, dans lequel la longueur de la biellette supplémentaire (17) dans la direction longitudinale est variable au moyen d'une déformation élastique.

7. Véhicule selon la revendication 6, dans lequel la biellette supplémentaire (17) est pliée avec un angle d'au moins 90° afin de constituer un point de flambage prédéterminé (26).

8. Véhicule selon l'une quelconque des revendications 1 à 7, dans lequel les joints pivotants (23, 25) des premières biellettes (21) et de la biellette supplémentaire (17) avec le véhicule sont supportés sur un châssis de support (18), positionné entre un moteur (2) du véhicule situé à l'avant de la cabine de conducteur (5) et la paroi avant (8) de la cabine de conducteur (5).
